# FASCICULE DE BREVET EUROPEEN

(11) **EP 1 827 090 B1**
(45) Date de publication et mention de la délivrance du brevet: **14.05.2008**
(21) Numéro de dépôt: 05848214.2
(22) Date de dépôt: 22.12.2005
(51) Int. Cl.: A01K 75/00

(54) **PROCEDE DE FABRICATION OU DE PRE-ASSEMBLAGE D'UN FILET, NOTAMMENT UN FILET DE PÊCHE, FILET DE PÊCHE AINSI OBTENU**
VERFAHREN ZUR HERSTELLUNG ODER ZUR VORMONTAGE EINES NETZES, INSBESONDERE EINES FISCHNETZES, UND SO ERHALTENES FISCHNETZ
METHOD FOR PRODUCTION OR PRE-ASSEMBLY OF A NET IN PARTICULAR A FISHING NET AND FISHING NET OBTAINED THUS

(30) Priorité: 24.12.2004 FR 0453222; 28.01.2005 FR 0550245
(43) Date de publication de la demande: 05.09.2007
(73) Titulaire: Establissements Armand Mondiet, F- 33470 Gujan-mestras (FR); Le Goff, Gérard, F-29870 Landela (FR); Conte, Jean-Bernard, F-22470 Plouezec (FR)
(72) Inventeur: LE GOFF, Gérard, F-29870 Landela (FR); CONTE, Jean-Bernard, F-22470 Plouezec (FR)
(74) Mandataire: Fantin, Laurent
(86) Numéro de dépôt international: PCT/FR2005/051132
(87) Numéro de publication internationale: WO 2006/070163

(56) Documents cités:
- EP-A- 1 384 401
- WO-A-03/061374
- FR-A- 2 729 821
- GB-A- 2 188 652

## Description

La présente invention se rapporte à un procédé de fabrication ou de pré-assemblage d'un filet, notamment un filet de pêche, ainsi qu'à un filet de pêche.

Le document FR-2.682.261 décrit un procédé pour relier des nappes de filets de pêche afin d'obtenir un filet de pêche appelé également « tramails ».

Selon ce document, les nappes sont pré-assemblées et reliées entre elles grâce à un adhésif ou un fil textile. Les mailles supérieures de ce pré-assemblage de nappes de filet sont ensuite enfilées sur un fil de montage qui est lui-même fixé à une ligne de flottaison, appelée également ralingue. De la même manière, les mailles inférieures de ce pré-assemblage sont enfilées sur un fil de montage qui est lui-même fixé à une ligne de lest. Pour la suite de la description, comme pour les différentes figures, on ne va décrire que la partie supérieure du filet, sachant que la partie inférieure peut être réalisée de la même manière.

Un tel montage nécessite un grand nombre d'heures de main d'oeuvre. Pour réduire les coûts de production, les fabricants cherchent de plus en plus à délocaliser la plus grande partie de ce montage dans des zones à faibles coûts de main d'oeuvre. Toutefois, le montage sur les lignes de flottaison et les lignes de lest ne peut être réalisé qu'à proximité des ports d'attache des bateaux. En effet, le transport d'un filet équipé des lignes de flottaison et de lest (avec éventuellement un transport aller des lignes à équiper) est relativement coûteux et a un coût supérieur à celui du montage, contrairement aux nappes de filets qui sont légères et peuvent être transportées d'un continent à l'autre avec des coûts de transport relativement réduits.

Ainsi, les nappes de filets sont pré-montées dans des pays à faibles coûts de main d'oeuvre. Cet ensemble pré-assemblé est ensuite relié aux lignes de flottaison et de lest à l'aide d'un fil de montage.

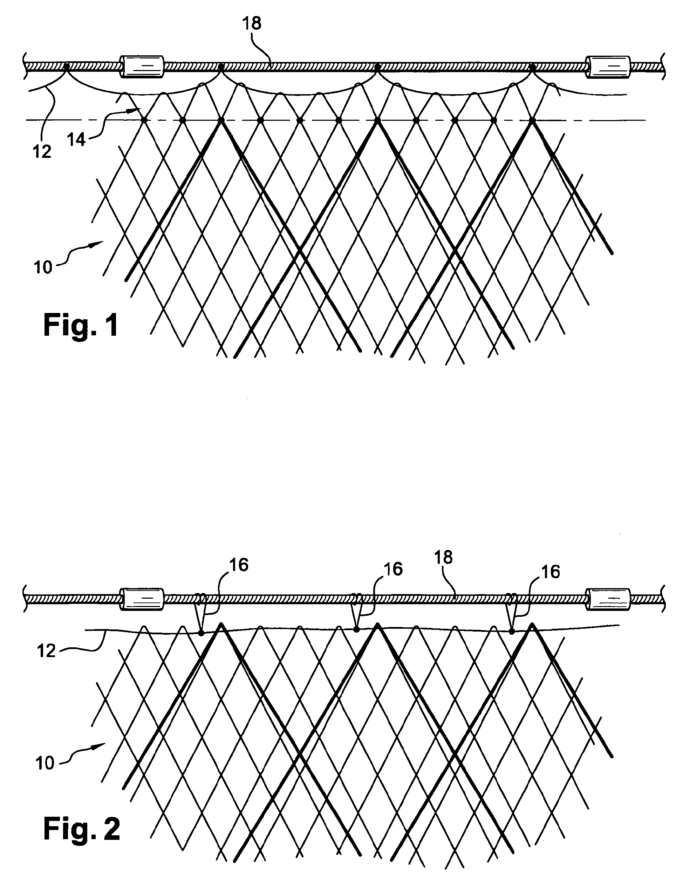

Selon une première technique illustrée par la figure 1, on ajoute à la lisière des nappes 10 des demi-mailles 14 qui assurent également l'assemblage à distance régulière des nappes de grandes mailles avec une nappe de petites mailles. Ensuite, on introduit un fil de montage 12 à travers les demi-mailles 14. D'autres techniques pourraient être utilisées pour relier la lisière des nappes 10 au fil de montage 12, voir par exemple le document GB-A-2188652.

Selon une technique illustrée par la figure 1, le fil de montage 12 est piqué à intervalles réguliers sur la ligne 18 de flottaison ou de lest en isolant entre chaque point de piquage un nombre prédéterminé de mailles, en l'occurrence quatre selon l'exemple illustré, les points de piquage étant disposés au droit des jonctions des nappes de petites et grandes mailles.

Même si cette technique permet de garder, lors de l'utilisation, les nappes réparties de manière homogène sur toute la longueur des lignes de flottaison et de lest, elle ne donne pas pleinement satisfaction car le prémontage et le montage sur les lignes de flottaison et/ou de lest sont relativement longs et donc coûteux. En complément, la séparation des lignes de flottaison lors du changement des nappes est relativement longue et coûteuse.

Selon une technique illustrée par la figure 2, on forme des boucles 16 avec le fil de montage 12 pour assurer la liaison entre le fil de montage 12 et la ligne 18 de flottaison ou de lest à l'aide de deux demi-clés inversées. Pour l'assemblage final, il suffit alors de disposer les boucles 16 sur un conduit, de faire passer la ligne 18 dans ledit conduit et de tirer la ligne 18 de flottaison ou de lest afin de répartir de manière régulière les boucles sur toute la longueur. Un tel assemblage est notamment décrit dans le document WO-03/061374.

La présente invention offre une solution alternative en proposant un procédé de fabrication ou de pré-assemblage d'un filet, notamment d'un filet de pêche, permettant de monter rapidement et de manière simple les nappes sur les lignes de flottaison et/ou de lest afin de réduire les coûts.

A cet effet, l'invention a pour objet un procédé de fabrication ou de pré-assemblage d'un filet suivant la revendication 1, notamment d'un filet de pêche, comportant au moins une nappe reliée à au moins un fil de montage lui-même relié au niveau de zones de liaison à une ligne de flottaison et/ou de lest, caractérisé en ce qu'il consiste à utiliser un fil de montage sous forme de bout comportant au moins deux fils, torons, brins, câbles ou analogues et à faire passer la ligne de flottaison et/ou de lest au moins une fois entre les fils, torons, brins, câbles ou analogues du bout au niveau des zones de liaison. L'invention a aussi pour objet un filet de pêche suivant la revendication 6 et un pré-assemblage de filet suivant la revendication 9.

D'autres caractéristiques et avantages ressortiront de la description qui va suivre de l'invention, description donnée à titre d'exemple uniquement, en regard des dessins annexés sur lesquels :
- la figure 1 est vue schématique illustrant une première technique de montage selon l'art antérieur,
- la figure 2 est une vue schématique illustrant une autre technique de montage selon l'art antérieur,
- la figure 3 est une vue schématique illustrant un ensemble pré-assemblé selon une première variante simplifiée de l'invention, avant montage sur une ligne de flottaison ou de lest,
- la figure 4 est une vue schématique illustrant l'ensemble pré-assemblé de la figure 3 monté sur une ligne de flottaison ou de lest,
- la figure 5 est une coupe d'une partie de l'ensemble pré-assemblé selon la ligne V-V de la figure 4,
- la figure 6 est une coupe selon la ligne VI-VI d'une partie du filet monté selon une variante de l'invention,
- la figure 7 est une vue schématique illustrant un ensemble pré-assemblé selon une autre variante de l'invention, avant montage sur une ligne de flottaison ou de lest,
- la figure 8 est une vue schématique illustrant l'ensemble pré-assemblé de la figure 7 monté sur une ligne de flottaison ou de lest,
- la figure 9 est une vue schématique de nappes de filet reliées avec un fil de montage,
- la figure 10 est une vue schématique illustrant une autre variante de l'invention,
- la figure 11A est une vue de détails illustrant une étape du montage du filet de la figure 10,
- la figure 11B est une vue de détails illustrant une autre étape du montage du filet de la figure 10, et
- la figure 12 est une vue schématique illustrant une autre variante de l'invention. Sur les différentes figures, on a représenté en 20 un filet comportant au moins une nappe 22. Avantageusement, le filet comprend trois nappes avec des dimensions de mailles différentes. Le mode de réalisation des nappes ainsi que leurs formes et natures ne sont pas plus détaillés car ils sont connus de l'homme du métier.

La ou les nappe(s) 22 sont enfilées sur un bout 24 ou reliées à un bout 24. Par bout, on entend tous les types de cordage.

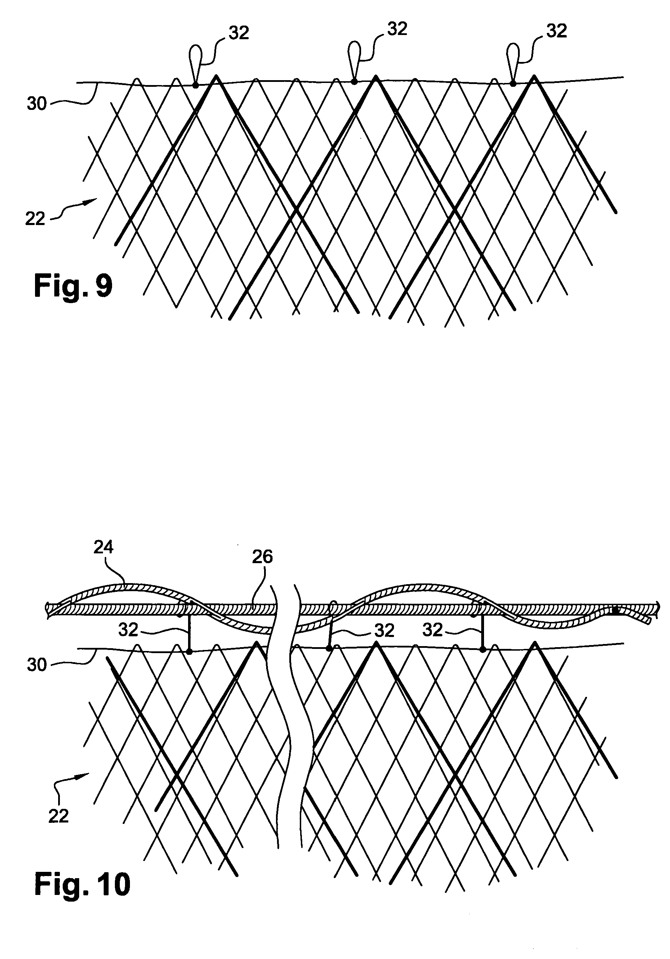

Comme précédemment, différentes techniques peuvent être utilisées pour assurer la liaison entre la ou les nappe(s) 22 et le bout 24. Selon les variantes, la ou les nappe(s) sont enfilée(s) directement sur le bout. Selon une autre variante, une demi maille peut être ajoutée aux nappes, comme illustré sur la figure 1. En variante, la ou les nappe(s) pourrai(en)t être enfilée(s) sur un fil de montage, qui est lui-même fixé au bout 24 par tout moyen approprié, comme illustré sur la figure 10. La liaison entre la ou les nappe(s) et le bout n'est pas plus détaillée car elle est connue de l'homme du métier.

Ce pré-assemblage du bout et des nappes est avantageusement réalisé dans des pays à faibles coûts de main d'oeuvre.

Pour finaliser le montage du filet, ce pré-assemblage doit être relié à au moins une ligne 26 de flottaison et/ou de lest. Pour la suite de la description, seule la liaison entre le pré-assemblage et la ligne de flottaison va être décrite. Selon les cas, on peut utiliser ce type de liaison ou une autre pour relier le pré-assemblage et la ligne de lest non représentée sur les figures.

Selon l'invention, le bout 24 utilisé pour le pré-assemblage est un bout toronné comportant au moins deux torons. De préférence, on utilise un bout toronné par paire (2-4-6).

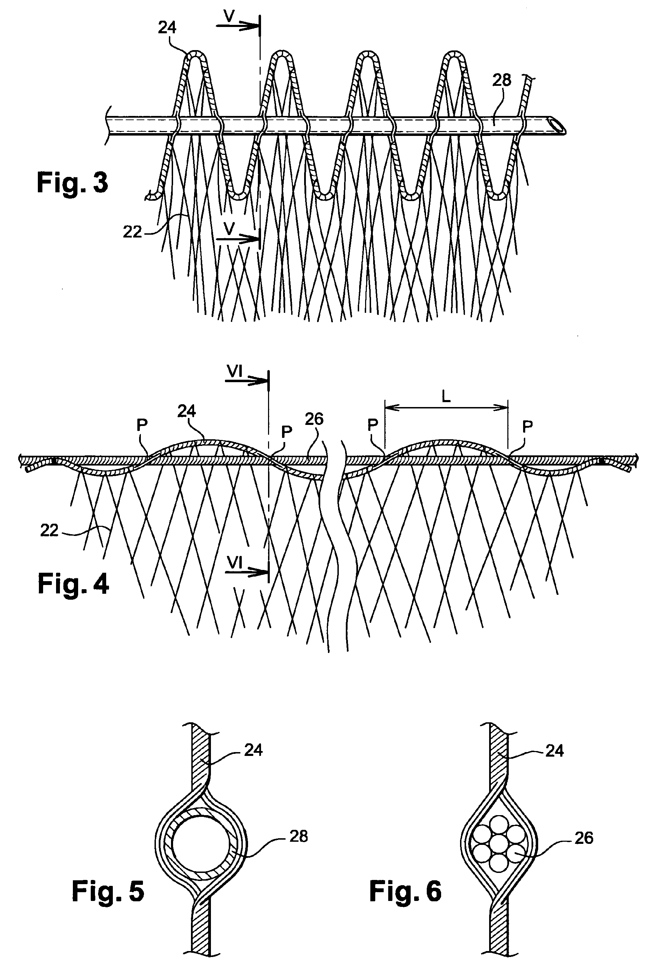

Pour relier le pré-assemblage et la ligne de flottaison 26, cette dernière est introduite entre les torons du bout 24 comme illustré sur la figure 6. Ce point de passage de la ligne 26 de flottaison entre les torons du bout 24 forme une zone de liaison entre ladite ligne 26 et ledit bout 24. De préférence, les zones de liaison permettent d'isoler un nombre prédéterminé de mailles afin d'obtenir une répartition homogène des nappes sur la longueur des lignes 26.

Selon une première variante simplifiée, la ligne de flottaison 26 passe entre les torons à intervalles sensiblement réguliers, comme illustré sur les figures 3 et 4. Selon un mode de réalisation, le bout toronné 24 est enfilé sur un tube 28, les boucles formées entre les points de passage de la ligne de flottaison 26 entre les torons du bout 24 ayant une longueur L. Sur la figure 5, on a représenté en coupe le bout toronné 24 enfilé sur le tube 28.

En suivant, la ligne 26 de flottaison est introduite dans le tube 28. Enfin, on enlève le tube 28.

De préférence, après l'introduction de la ligne 26 de flottaison dans le tube 28, on tire sur le bout 24 et/ou sur la ligne 26 qui peuvent être éventuellement liés par tout moyen approprié, par exemple par piquage afin de transférer les points de passage sur la ligne 26 de flottaison ou de lest.

On obtient alors le filet tel qu'illustré sur la figure 4. Le bout 24 s'étend sur toute la longueur de la ligne de flottaison 26, les zones de liaison entre le bout et la ligne de flottaison, correspondant aux points de passage P de la ligne de flottaison entre les torons du bout, étant séparées d'une distance sensiblement égale à L. Les frottements entre la ligne de flottaison et les torons du bout permettent de limiter les risques de glissement du bout sur la ligne de flottaison ce qui permet de conserver une bonne répartition de la ou des nappe(s) le long de la ligne de flottaison. On note que les nappes sont bloquées sur la ligne 26 de flottaison ou de lest lorsque le bout 24 et ladite ligne sont liés de part et d'autre des nappes, le bout 24 ayant une longueur légèrement supérieure à la ligne 26.

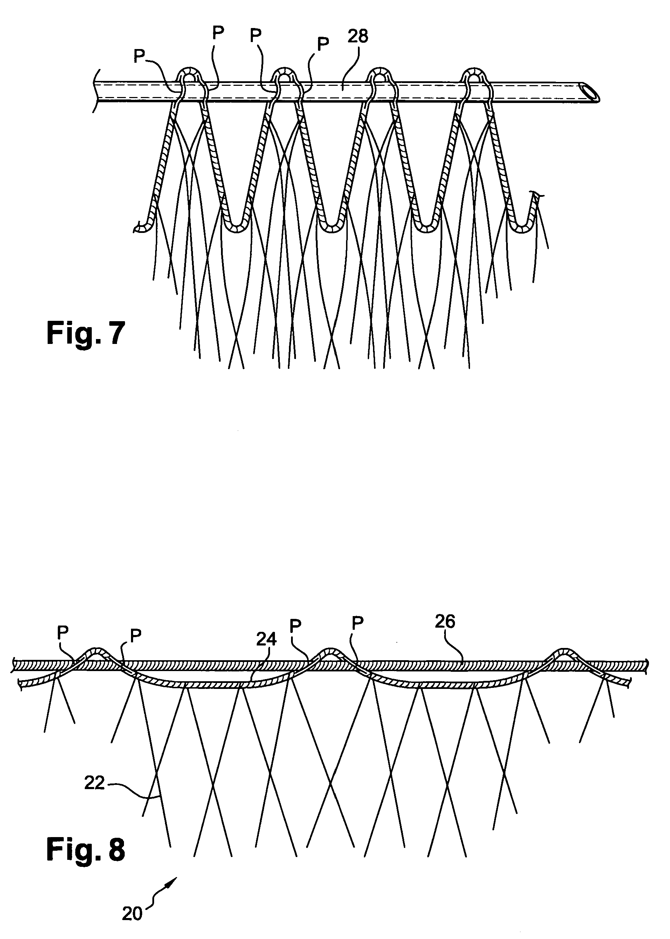

Selon une autre variante illustrée sur les figures 7 et 8, les zones de liaison entre la ligne de flottaison 26 et le bout 24 sont séparées comme précédemment d'une distance L, chaque zone de liaison comprenant au moins deux points de passage P rapprochés. Cet agencement permet de réduire encore les risques de glissement du bout sur la ligne de flottaison.

Comme précédemment, l'introduction de la ligne de flottaison entre les torons du bout peut être obtenue en utilisant un tube 28 comme illustré sur la figure 7.

Toutefois, d'autres solutions pourraient être envisagées pour enfiler la ligne de flottaison entre les torons du bout 24, par exemple une aiguille.

Selon l'invention, on obtient un montage rapide et simple des lignes de flottaison et de lest ce qui contribue à réduire les coûts.

Selon les variantes, le montage du bout 24 sur le tube 28 peut être réalisé dans une zone à faibles coûts de main d'oeuvre. Dans ce cas, le pré-assemblage comprend la ou les nappe(s), le ou les bout(s) toronné(s) (un pour la ligne de flottaison et/ou un pour la ligne de lest) et un tube pour chaque bout pour permettre d'enfiler la ligne de flottaison et/ou de lest.

Selon un autre avantage procuré par l'invention, le démontage de la ligne de flottaison ou de lest est très rapide et très simple car il suffit de faire coulisser le bout 24 sur ladite ligne.

Sur les figures 9, 10, 11A et 11B, on a représenté une autre variante de l'invention.

Dans ce cas, la ou les nappes 22 sont enfilées sur un fil de montage 30. Des boucles 32 sont réalisées au niveau du fil de montage permettant de séparer un nombre prédéterminé de mailles, par exemple quatre petites mailles et une grande maille.

Selon ce mode de réalisation, la ligne de flottaison 26 est introduite entre les torons du bout 24 et les boucles 32 du fil de montage passent entre les torons du bout 24 à proximité du point de passage de la ligne de flottaison 26 et sont enfilées sur la ligne de flottaison 26.

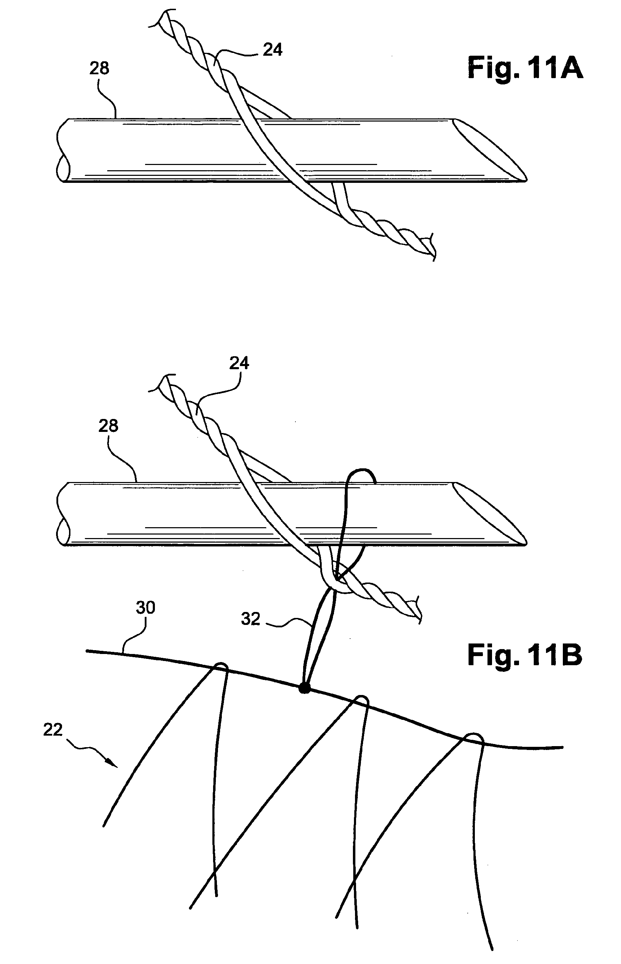

Avantageusement pour l'assemblage, on utilise comme précédemment un tube 28, comme illustré sur les figures 11A et 11B. Dans une première phase, le tube passe entre les torons du bout 24 comme illustré sur la figure 11A. Préalablement à ce passage ou juste après, une boucle 32 passe entre les torons du bout 24, en laissant de préférence un toron entre le point de passage du tube 28 et le point de passage de la boucle 32, puis la boucle 32 est enfilée sur le tube 28, comme illustré sur la figure 11B. Les étapes illustrées sur les figures 11A et 11B sont ainsi répétées.

Comme précédemment, le montage du bout 24 sur le tube 28 peut être réalisé dans une zone à faibles coûts de main d'oeuvre.

Pour achever le montage du filet, la ligne 26 de flottaison est introduite dans le tube 28. Enfin, on enlève le tube 28.

Cette variante permet d'obtenir un montage de filet avec des balancines. Selon cette variante, les points d'ancrage des nappes sur la ligne de flottaison ou de lest sont parfaitement immobiles.

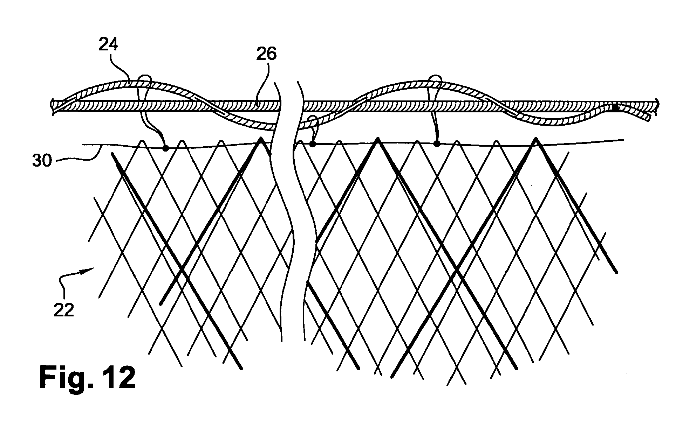

En variante, comme illustré sur la figure 12, les boucles 32 sont enfilées sur le bout 24, la ligne de flottaison 26 étant introduite entre les torons du bout 24 en isolant entre chaque passage un nombre déterminé de boucles 32, à l'occurrence une boucle.

Bien entendu, l'invention n'est évidemment pas limitée au mode de réalisation représenté et décrit ci-dessus, mais en couvre au contraire toutes les variantes telles que définies par les revendications jointes, notamment en ce qui concerne la nature et les formes des différents éléments constituant le filet qui peut comprendre une ou plusieurs nappes.

Par ailleurs, le bout 24 peut ne pas être toronné. Le bout 24 est un assemblage d'au moins deux fils, brins, câbles ou analogues qui peuvent être toronnés, tressés, entrelacés, entrecroisés, moulinés ou autres. De plus, ces torons, fils, brins, câbles ou analogues peuvent être réalisés à partir de différents matériaux.

Enfin, le filet monté selon l'invention pourrait être utilisé dans d'autres domaines que la pêche.

## Revendications

1. Procédé de fabrication ou de pré-assemblage d'un filet, notamment d'un filet de pêche, comportant au moins une nappe (22) reliée à au moins un fil de montage lui-même relié au niveau de zones de liaison à une ligne (26) de flottaison et/ou de lest, **caractérisé en ce qu'**il consiste à utiliser un fil de montage sous forme de bout (24) comportant au moins deux fils, torons, brins, câbles ou analogues assemblés et à faire passer la ligne (26) de flottaison et/ou de lest au moins une fois entre les fils, torons, brins, câbles ou analogues du bout (24) au niveau des zones de liaison.

2. Procédé de fabrication ou de pré-assemblage d'un filet selon la revendication 1, **caractérisé en ce que** les zones de liaison sont séparées d'une distance sensiblement constante et isolent un nombre prédéterminé de mailles.

3. Procédé de fabrication ou de pré-assemblage d'un filet selon la revendication 1 ou 2, **caractérisé en ce qu'**il consiste à faire passer la ligne (26) de flottaison entre les fils, torons, brins, câbles ou analogues du bout (24) au moins en deux points de passage P rapprochés au niveau des zones de liaison.

4. Procédé de fabrication ou de pré-assemblage d'un filet selon l'une quelconque des revendications 1 à 3, **caractérisé en ce qu'**il consiste à enfiler le bout (24) sur un tube (28) en faisant passer ledit tube entre les fils, torons, brins, câbles ou analogues du bout au moins une fois dans les zones de liaison, à introduire la ligne (26) de flottaison ou de lest dans le tube (28).

5. Procédé de fabrication ou de pré-assemblage d'un filet selon la revendication 4, **caractérisé en ce qu'**après l'introduction de la ligne (26) de flottaison ou de lest dans le tube (28), on tire sur le bout (24) et/ou sur la ligne (26) qui peuvent être éventuellement liés, afin de transférer les points de passage sur la ligne (26) de flottaison ou de lest.

6. Filet obtenu à partir du procédé selon l'une quelconque des revendications 1 à 5, ledit filet comportant au moins une nappe (22) reliée à au moins un fil de montage lui-même relié dans des zones de liaison à une ligne (26) de flottaison et/ou de lest **caractérisé en ce que** le fil de montage est un bout (24) comportant au moins deux fils, torons, brins, câbles ou analogues et **en ce que** la ligne (26) de flottaison et/ou de lest passe au moins une fois entre les fils, torons, brins, câbles ou analogues du bout (24) au niveau des zones de liaison.

7. Filet selon la revendication 6, **caractérisé en ce que** pour chaque zone de liaison entre le bout (24) et la ligne (26) de flottaison ou de lest, ladite ligne (26) passe entre les fils, torons, brins, câbles ou analogues du bout (24) en au moins deux points de passage P rapprochés.

8. Filet de pêche selon la revendication 6 ou 7, **caractérisé en ce que** les zones de liaison sont séparées d'une distance sensiblement constante et isolent un nombre prédéterminé de mailles.

9. Pré-assemblage utilisé pour le montage d'un filet selon l'une quelconque des revendications 6 à 8, ledit pré-assemblage comprenant au moins une nappe (22), **caractérisé en ce qu'**il comprend au moins un bout (24) avec au moins deux fils, torons, brins, câbles ou analogues et au moins un tube (28) sur lequel est enfilé le bout (24) en faisant passer ledit tube (28) entre les fils, torons, brins, câbles ou analogues du bout au moins une fois dans les zones de liaison.

## Claims

1. Process for the production or pre-assembly of a net, particularly a fishing net, comprising at least one layer (22) connected to at least one mounting filament itself connected to at connection zones to a flotation and/or sinker line (26), **characterized in that** it consists in using a mounting filament in the form of an end (24) comprising at least two filaments, strands, lines, cables or the like that are assembled, and in passing the flotation and/or sinker line (26) at least once between the filaments, strands, lines, cables or the like of the end (24) at the connection zones.

2. Process for the production or pre-assembly of a net according to claim 1, **characterized in that** the connection zones are separated by a substantially constant distance and isolate a predetermined number of meshes.

3. Process for the production or pre-assembly of a net according to claim 1 or 2, **characterized in that** it consists in passing the flotation line (26) between the filaments, strands, lines, cables or the like of the end (24) at at least two points of the passage P at the connection zones.

4. Process for the production or pre-assembly of a net according to any one of claims 1 to 3, **characterized in that** it consists in threading the end (24) on a tube (28) by causing said tube to pass between the filaments, strands, lines, cables or the like of the end at least once in the connection zones, in introducing the flotation or sinker line (26) into the tube (28).

5. Process for the production or pre-assembly of a net according to claim 4, **characterized in that** after introduction of the flotation or sinker line (26) into the tube (28), one pulls on the end (24) and/or on the line (26) which can if desired be connected, so as to transfer the passage points to the flotation or sinker line (26).

6. Net obtained by the process according to any one of claims 1 to 5, said net comprising at least one layer (22) connected to at least one mounting filament itself connected in connection zones to the flotation and/or sinker line (26), **characterized in that** the mounting filament is an end (24) comprising at least two filaments, strands, lines, cables or the like and **in that** the flotation and/or sinker line (26) passes at least once between the filaments, strands, lines, cables or the like of the end (24) in the connection zones.

7. Net according to claim 6, **characterized in that** for each connection zone between the end (24) and the flotation or sinker line (26), said line (26) passes between the filaments, strands, lines, cables or the like of the end (24) and at least two passage points P.

8. Fishing net according to claim 6 or 7, **characterized in that** the connection zones are separated by a substantially constant distance and isolate a predetermined number of meshes.

9. Pre-assembly used for the mounting of a net according to any one of claims 6 to 8, said pre-assembly comprising at least one layer (22), **characterized in that** it comprises at least one end (24) with at least two filaments, strands, lines, cables or the like and at least one tube (28) on which is threaded the end (24) by causing said tube (28) to pass between the filaments, strands, lines, cables or the like of the end at least once in the connection zones.

## Patentansprüche

1. Verfahren zur Herstellung bzw. zur Vormontage eines Netzes, insbesondere eines Fischernetzes, umfassend mindestens ein Gewebe (22), das mit mindestens einem Montagefaden verbunden ist, welcher wiederum im Bereich von Verbindungsbereichen mit einer Schwimm- und/oder Ballastleine (26) verbunden ist, **dadurch gekennzeichnet, dass** es darin besteht, einen Montagefaden in Form eines mindestens zwei zusammengefügte Fäden, Litzen, Drähte, Kabel oder dgl. umfassenden Stückes (24) zu verwenden und die Schwimm- und/oder Ballastleine (26) mindestens einmal zwischen den Fäden, Litzen, Drähten, Kabeln oder dgl. des Stückes (24) im Bereich der Verbindungsbereiche hindurchzuführen.

2. Verfahren zur Herstellung bzw. zur Vormontage eines Netzes nach Anspruch 1, **dadurch gekennzeichnet, dass** die Verbindungsbereiche in einem im Wesentlichen konstanten Abstand zueinander stehen und eine vorbestimmte Anzahl an Maschen voneinander trennen.

3. Verfahren zur Herstellung bzw. zur Vormontage eines Netzes nach Anspruch 1 oder 2, **dadurch gekennzeichnet, dass** es darin besteht, die Schwimmleine (26) an mindestens zwei benachbarten Durchführungspunkten P im Bereich der Verbindungsbereiche zwischen den Fäden, Litzen, Drähten, Kabeln oder dgl. des Stückes (24) hindurchzuführen.

4. Verfahren zur Herstellung bzw. zur Vormontage eines Netzes nach einem der Ansprüche 1 bis 3, **dadurch gekennzeichnet, dass** es darin besteht, ein Rohr (28) durch das Stück (24) hindurchzufädeln, wobei dieses Rohr mindestens einmal in den Verbindungsbereichen zwischen die Fäden, Litzen, Drähte, Kabel oder dgl. des Stückes oder dgl. des Stückes hindurchgeführt wird, und die Schwimm- oder Ballastleine (26) in das Rohr (28) einzuführen.

5. Verfahren zur Herstellung bzw. zur Vormontage eines Netzes nach Anspruch 4, **dadurch gekennzeichnet, dass** nach dem Einführen der Schwimm- oder Ballastleine (26) in das Rohr (28) ein Zug auf das Stück (24) und/oder auf die Leine (26), die gegebenenfalls miteinander verbunden sind, ausgeübt wird, so dass die Durchführungspunkte auf der Schwimm- oder Ballastleine (26) zu liegen kommen.

6. Netz, hergestellt nach dem Verfahren nach einem der Ansprüche 1 bis 5, wobei das Netz mindestens ein Gewebe (22) umfasst, das mit mindestens einem Montagefaden verbunden ist, welcher wiederum im Bereich von Verbindungsbereichen mit einer Schwimm- und/oder Ballastleine (26) verbunden ist, **dadurch gekennzeichnet, dass** der Montagefaden ein mindestens zwei zusammengefügte Fäden, Litzen, Drähte, Kabel oder dgl. umfassendes Stück (24) ist, und dass die Schwimm- und/oder Ballastleine (26) mindestens einmal zwischen die Fäden, Litzen, Drähte, Kabel oder dgl. des Stückes (24) im Bereich der Verbindungsbereiche hindurchgeführt ist.

7. Netz nach Anspruch 6, **dadurch gekennzeichnet, dass** für jeden Verbindungsbereich zwischen dem Stück (24) und der Schwimm- oder Ballastleine (26) die Leine (26) an mindestens zwei benachbarten Durchführungspunkten P zwischen den Fäden, Litzen, Drähten, Kabeln oder dgl. des Stückes (24) hindurchgeführt ist.

8. Fischernetz nach Anspruch 6 oder 7, **dadurch gekennzeichnet, dass** die Verbindungsbereiche in einem im Wesentlichen konstanten Abstand zueinander stehen und eine vorbestimmte Anzahl an Maschen voneinander trennen.

9. Vormontage zur Montage eines Netzes nach einem der Ansprüche 6 bis 8, wobei die Vormontage mindestens ein Gewebe (22) umfasst, **dadurch gekennzeichnet, dass** sie mindestens ein Stück (24) mit mindestens zwei Fäden, Litzen, Drähten, Kabeln oder dgl. und mindestens ein Rohr (28) umfasst, wobei das Rohr (28) durch das Stück (24) derart hindurchgefädelt wird, dass dieses Rohr (28) mindestens einmal in den Verbindungsbereichen zwischen die Fäden, Litzen, Drähten, Kabeln oder dgl. des Stückes hindurchgeführt wird.
